# EUROPEAN PATENT SPECIFICATION

(11) **EP 0 494 666 B1**
(45) Date of publication and mention of the grant of the patent: **30.07.1997**
(21) Application number: 92100262.2
(22) Date of filing: 09.01.1992
(51) Int. Cl.: G02F 1/135

(54) **Spatial light modulator**
Räumlicher Lichtmodulator
Modulateur spatial de lumière

(30) Priority: 09.01.1991 JP 1146/91
(43) Date of publication of application: 15.07.1992
(73) Proprietor: MATSUSHITA ELECTRIC INDUSTRIAL CO., LTD., Kadoma-shi, Osaka-fu, 571 (JP)
(72) Inventor: Akiyama, Koji, Neyagawa-shi, Osaka (JP); Takimoto, Akio, Neyagawa-shi, Osaka (JP); Ogawa, Hisahito, Ikoma-gun, Nara (JP)
(74) Representative: Eisenführ, Speiser & Partner

(56) References cited:
- EP-A- 0 463 803
- APPLIED PHYSICS LETTERS. vol. 51, no. 16, October 1987, NEW YORK US pages 1233 - 1235 N.S.TAKAHASHI 'HIGH-SPEED LIGHT VALVE USING AN AMORPHOUS SILICON ..' PAGE 1233 LEFT -HAND COLUMN
- IEEE TRANSACTIONS ON ELECTRON DEVICES vol. 36, no. 12, December 1989, NEW YORK US pages 2959 - 2964 WEN LI & AL 'HYDROGENATED AMORPHOUS SILICON PHOTOSENSOR FOR..' CHAPTER IV RESULTS AND DISCUSSIONS
- APPLIED OPTICS. vol. 27, no. 9, May 1988, NEW YORK US pages 1797 - 1802 P.R. ASHLEY 'LIQUID CRYSTAL SPATIAL LIGHT MODULATOR ...' CHAPTER I .INTRODUCTION AND II DEVICE DESIGN
- S.M. Sze, Physics of Semiconductor Devices, JOHN WILEY, 1981, pp. 754-60

## Description

### BACKGROUND OF THE INVENTION

The present invention relates to a spatial light modulator used in an optical information processing device or display.

The spatial light modulator is an essential component in any hardware device used for optical information processing, including optical logic operations and optical neurocomputing. There are two general types of spatial light modulators: optically addressed and electrically addressed. Electrically-addressed spatial light modulators offer the advantage of easy control because the display contents of segments can be rewritten by an electrical signal, but this advantage is offset by the long length of time required to rewrite the entire segments when the display size increases because of line scan technique. Optically-addressed spatial light modulators, on the other hand, can rewrite in parallel the display by means of two-dimensional optical information, and the writing time is therefore not dependent upon the display size. Optically spatial light modulators are therefore expected to become an essential component in optical operations due to their parallel, high speed processing of two-dimensional optical information.

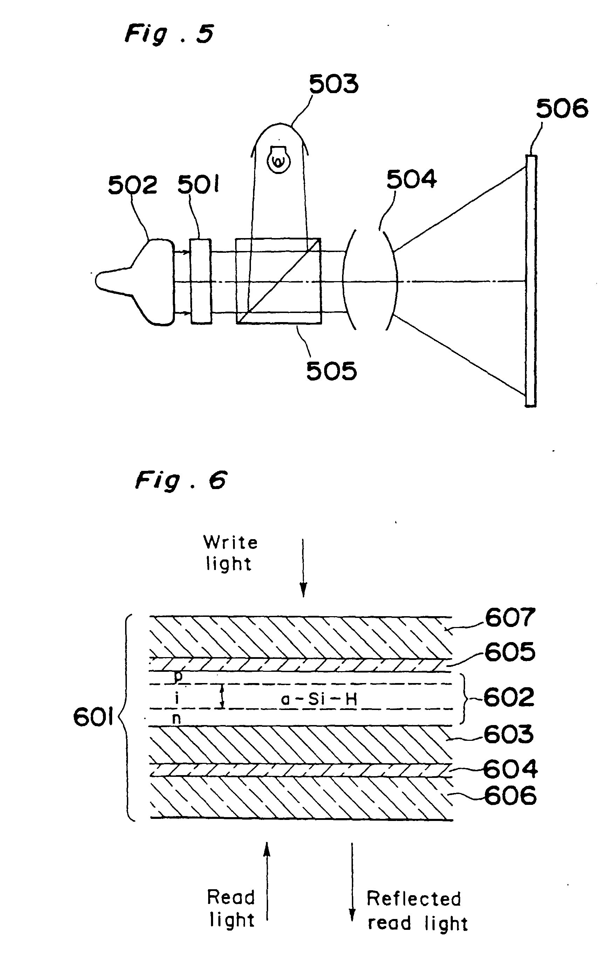

The most common types of optically addressed spatial light modulators have a construction combining a photoconductive layer and a liquid crystal layer. For example, Fig. 6 is a cross sectional of a conventional device in which an amorphous Si photoconductive layer 602 and a ferroelectric liquid crystal layer 603 are sandwiched between transparent conductive electrodes 604 and 605 formed on two glass wafers 606 and 607. This device has been reported in the literature (G. Moddel et al.: Appl Phys. Lett. 55(6) (1989), pp. 537 - 539).

This spatial light modulator is basically operated by applying light to the photoconductive layer to change the voltage of the liquid crystal layer, thus modulating the light as it passes through the liquid crystal layer. Thus, the factors controlling the sensitivity and response of the spatial light modulator include the response rate of the liquid crystals and the intensity of the photocurrent flowing through the photoconductive layer. The ideal photocurrent has a quantum efficiency of 1 if the incident light intensity is constant. Therefore, if a quantum efficiency of 1 is achieved, the highest photosensitivity and the fastest response rate can be achieved for the liquid crystal used.

However, this conventional spatial light modulator 601 is not designed to enable the flow of a photocurrent with a quantum efficiency of 1, and it was not possible to achieve high sensitivity and a high response speed.

### SUMMARY OF THE INVENTION

Therefore, an object of the present invention is to provide a spatial light modulator to resolve the aforementioned problem, improving the photosensitivity and response tioned problem, improving the photosensitivity and response speed of the device by using a photoconductive layer enabling the flow of a photocurrent with a quantum efficiency of approximately 1.

To achieve this object, a spatial light modulator according to the present invention comprises the features as claimed in claim 1.

A quantum efficiency 1 state is a state in which there is absolutely no loss of the photogenerated carrier. In other words, there is no loss of carrier due to deep traps or recombination centers, and the carrier transits freely through the photoconductive layer. The most effective means of preventing carrier loss is to form a film free of the defects that become traps and recombination centers. Recombination in a localized state can be reduced by reducing defects, but direct recombination of electrons and electron holes may still occur. To eliminate loss from these causes, the photogenerated electron/hole pairs must be separated and transited quickly to the electrodes. Specifically, the electrical field of that part producing and transiting the carrier must be increased, and the carrier must be separated by the electrical field and the velocity of carrier movement accelerated so that the carrier transits through the photoconductive layer before recombination can occur. To do this, it is sufficient to form a depletion layer across the entire photoconductive layer and effectively apply an external electrical field to the photoconductive layer.

The photoconductive layer used in this spatial light modulator is a semiconductor. By adding impurities to the semiconductor the electrical characteristics of the semiconductor can be significantly changed. Specifically, three types of semiconductors are used: a p-type semiconductor in which there are more holes than electrons as free carriers, a n-type semiconductor in which there are more electrons, and a pure (also known as an i-type) semiconductor to which no impurities have been added. By connecting these semiconductors to form p/n junctions and p/i/n junctions, a depletion layer can be generated at the junctions. When an reverse bias is applied to these junctions, the carrier is purged and the depletion layer expands to both sides, and this bias drops primarily across the depletion layer. Therefore, if the photoconductive layer is designed so that the depletion layer is formed throughout the inside of the photoconductive layer at the voltage which drives the spatial light modulator, there is no photocarrier loss and the photosensitivity and response speed of the spatial light modulator can be increased.

### BRIEF DESCRIPTION OF THE DRAWINGS

The present invention will become more fully understood from the detailed description given below and the accompanying diagrams wherein:
Fig. 1 is a cross section of a spatial light modulator according to a first embodiment of the present invention,
Fig. 2 is a cross section of a spatial light modulator according to an alternative embodiment of the present invention,
Fig. 3 is a cross section of a transmission type spatial light modulator,
Fig. 4 is a timing chart of the applied voltage, input light, and output light used in the preferred embodiments of the spatial light modulator according to the present invention,
Fig. 5 is a schematical side view showing the construction of a projection display system used in one embodiment of the invention, and
Fig. 6 is a cross section of a conventional spatial light modulator.

### DESCRIPTION OF PREFERRED EMBODIMENTS

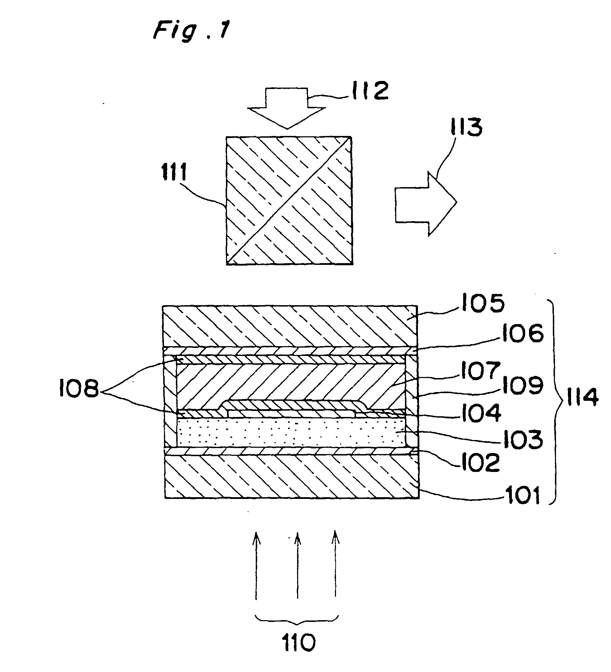

The preferred embodiments of the present invention are described hereinbelow with reference to the accompanying figures, of which Fig. 1 is a cross section of a spatial light modulator manufactured as a first embodiment. The construction of the element features a transparent conductive electrode 102 (e.g., of ITO or SnOₓ) formed on a transparent insulation substrate 101 (e.g., a glass plate), and a photoconductive layer 103 and metallic electrode 104 are formed in sequence over the transparent conductive electrode 102; between this sequence of layers and the transparent conductive electrode 106 formed on another transparent insulation substrate 105 is sandwiched a liquid crystal layer 107. The liquid crystal layer 107 is sealed by an alignment film 108 comprising a polymer thin film treated with an obliquely evaporated SiO₂ film formed on each side, and a spacer 109 arranged between two substrates 101 and 105 so as to enclose the periphery of the layer 107.

The photoconductive layer 103 forms a p/i/n diode construction from the transparent conductive electrode 102 side, and has rectification properties. Specific materials which may be used to form the photoconductive layer 103 include amorphous materials containing hydrogen, including Si, Ge, Si₁₋ₓCₓ, Si₁₋ₓGeₓ, Ge₁₋ₓCₓ, (hereinafter abbreviated as a-Si:H, a-Ge:H, a-Si₁₋ₓCₓ:H, a-Si₁₋ₓGeₓ:H, a-Ge₁₋ₓCₓ:H). Furthermore, when these materials are used, B, Al, and Ga may be used as p-type impurities, and P, As, Sb, and Se may be used as n-type impurities. Next, the most typical of these materials, a-Si:H, is used by way of example when considering the conditions under which the depletion layer may spread throughout the photoconductive layer.

The p/i junction is considered first in the p/i/n construction. If the p-layer accepter density (Nₐ) and the i-layer donor density (N_{d}) are constant within the same layer, and all donors and acceptors are assumed to be ionized, and further that the impurity density changes at the junctions in a stepped manner, the depletion layer width dₚ in the p-layer and the depletion layer dᵢ in the i-layer can be expressed by equations (1) and (2), respectively (cf., Wada Masanobu, Semiconductor Engineering, Asakura Shoten publ., pp. 76 ~ 78)${\text{d}}_{\text{p}} {\text{= [2ε.ε}}_{\text{0}} {\text{.N}}_{\text{d}} {\text{(V}}_{\text{d}} {\text{-V}}_{\text{0}} {\text{/2)/{eN}}_{\text{a}} {\text{(N}}_{\text{a}} {\text{+N}}_{\text{d}} {\text{)}]}}^{\text{1/2}}$${\text{d}}_{\text{i}} {\text{= [2ε·ε}}_{\text{0}} {\text{·N}}_{\text{a}} {\text{(V}}_{\text{d}} {\text{-V}}_{\text{0}} {\text{/2)/{eN}}_{\text{d}} {\text{(N}}_{\text{a}} {\text{+N}}_{\text{d}} {\text{)}]}}^{\text{1/2}}$ where ε is the relative dielectric constant, ε₀ is the dielectric constant in a vacuum, V_{d} is the diffusion potential, and V₀ is the externally applied voltage (where V₀ < 0 when the p-layer side is negative). Normally the acceptor density of the a-Si:H p-layer is 1 x 10¹⁷ ~ 1 x 10²⁰ cm⁻³, and the i-layer donor density is less than 1 x 10¹⁶ cm⁻³. Therefore, because it is possible for Nₐ » N_{d} but V_{d} cannot be neglected when being compared to (V₀/2) since V_{d} ≤ 0.9(V), dₚ and dᵢ can each approximate the values obtained by equations (3) and (4), respectively.${\text{d}}_{\text{p}} {\text{= [2ε.ε}}_{\text{0}} {\text{.N}}_{\text{d}} {\text{(V}}_{\text{d}} {\text{-V}}_{\text{0}} {\text{/2)/{eN}}_{\text{3}} {\text{}}^{\text{2}} {\text{}]}}^{\text{1/2}}$${\text{d}}_{\text{i}} {\text{= [2ε.ε}}_{\text{0}} {\text{(V}}_{\text{d}} {\text{-V}}_{\text{0}} {\text{/2)/{eN}}_{\text{d}} {\text{}}^{\text{2}} {\text{}]}}^{\text{1/2}}$ Because it is the i-layer which absorbs light, generates the photocarriers, and transports the carriers, the width of the depletion layer in the i-layer has the greatest effect on the photocurrent in the photoconductive layer 103. Thus, by focusing on the i-layer the depletion layer width dᵢ can be obtained. If in equation (4) ε = 12, ε₀ = 8.85 x 10⁻¹⁴ (F/cm), 5 (V) ≤ (-V₀) ≤ 15 (V), e = 1.6 x 10⁻¹⁹ (C), and N_{d} = 1 x 10¹⁶ (cm⁻³), then dᵢ takes the range defined by equation (5). However, because the external voltage applied to the spatial light modulator is almost completely applied to the photoconductive layer 103 when the voltage has a reverse bias, V₀ is the external voltage used to actually drive the spatial light modulator.${\text{0.7 µm ≤ d}}_{\text{i}} \text{≤ 1.1 µm}$

Furthermore, because the same can be considered to be true for an i/n junction and a p/i junction, the total width of the depletion layer formed in the i-layer of p/i/n junction when the external voltage V₀ {5(V) ≤ (-V₀) ≤ 15 (V)} is applied to p/i/n junction as a whole is expressed by equation (6).${\text{1.4 µm ≤ 2d}}_{\text{i}} \text{≤ 2.2 µm}$

Thus, the thickness of the i-layer must be less than 2.2 µm to form a depletion layer across all of the i-layer, and, particularly when the depletion layer thickness is less than 1.4 µm, the depletion layer spreads throughout the i-layer when any external voltage V₀ which can drive the spatial light modulator is applied, achieving both high sensitivity and a high response speed.

To determine if the above hypothesis is correct, an i-type a-Si:H thin film was formed on a p-type low resistance single crystal Si substrate, for which the acceptor density is known, and an n-type low resistance single crystal Si substrate, for which the acceptor density is known, and the voltage-capacitance (V-C) characteristics were measured. As a result, values matching those of equation (5) were obtained within ±0.1 µm error in both cases. It was also shown that the lower limit of dᵢ is determined from the field strength of the p/i/n junction breakdown. In other words, when a p/i/n diode is formed using the above materials, the minimum thickness of the i-layer is 0.1 µm because the breakdown field strength of the junctions is 5 x 10⁵ V/cm. With materials other than a-Si:H, i.e., a-Ge:H, a-Si₁₋ₓCₓ:H, a-Si₁₋ₓGeₓ:H, and a-Ge₁₋ₓCₓ:H, the same values can be obtained as with a-Si:H because the values vary only in relation to the dependence of the relative dielectric constant ε of the material.

It is to be noted that in addition to the width of the depletion layer in the i-layer, it is also necessary to reduce the number of defects causing trapping and recombination centers of the carriers to increase the photocurrent of the photoconductive layer 103 as described above. One indication of the number of these defects is the dangling bond density.

The dangling bond density is measured by electron spin resonance (ESR), and the value obtained with ESR must be less than 10¹⁶ cm⁻³. Trace amounts of oxygen or nitrogen atoms, which have a dangling bond termination function similar to hydrogen, can be added on the order of 0.05 ~ 0.1 wt% to the photoconductive layer 103 to reduce this dangling bond density.

Materials which can be used for the liquid crystal layer 107 include nematic liquid crystal, ferroelectric liquid crystal, and polymer dispersed liquid crystal. When a ferroelectric liquid crystal is used, the electrical impedance can be reduced because the thickness of the liquid crystal layer can be reduced, thus making it possible to reduce the thickness of the photoconductive layer, achieve faster response, and impart a memory function, making such materials more effective. Moreover, because the transmission characteristics of ferroelectric liquid crystal have a steep threshold, these materials are ideally suited to optical threshold processing. In addition, a polarizer and alignment layer are not required when a polymer dispersed liquid crystal is used.

The spatial light modulator shown in Fig. 1 is a reflection-mode device. The input light 110 is input from the transparent insulation substrate 101, and the output light 113 is obtained by passing the readout light 112 through the polarizing beam splitter 111 and reflecting the light to the transparent insulated substrate 105. The metallic electrode 104 functions as an electrode which collects the photocurrent flowing through the photoconductive layer 103, and as the mirror reflecting the read light 112.

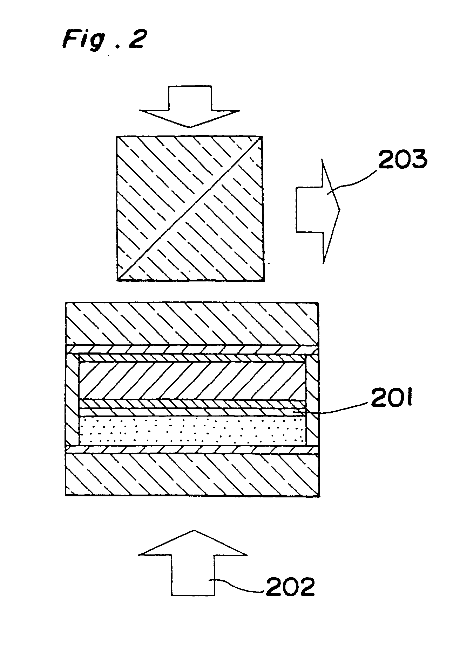

The materials forming the metallic electrode 104 may be a metallic thin film with high reflectivity, e.g., Ag, Al, Cr, Ni, or Mo. As shown in Fig. 2, a dielectric mirror 201 of alternately layered dielectric substances of different refractive indices may also be used in place of the metallic electrode 104. In this case the input light can be treated as an image, and an output image 203 modulated by the liquid crystal layer 107 can be obtained for a given input image 202. In addition, when these materials are used in the photoconductive layer 103, this same function can be achieved without using a dielectric mirror 201 because the surface reflectivity of the photoconductive layer 103 is 30 ~ 40%. However, to increase the resolution of the output image 203, the lateral dispersion of the carrier in the n-layer closest to the liquid crystal layer 107 in the photoconductive layer 103 must be suppressed. To do this when the n-layer is comprised of materials with a low resistance, including a-Si:H, a-Ge:H, a-Si₁₋ₓGeₓ:H, and a-Ge₁₋ₓCₓ:H, oxygen or nitrogen can be added at 0.01 ∼ 0.1 wt% or the hydrogen content can be increased from 5% to 20% relative to the hydrogen content of the i-layer in order to increase the resistance.

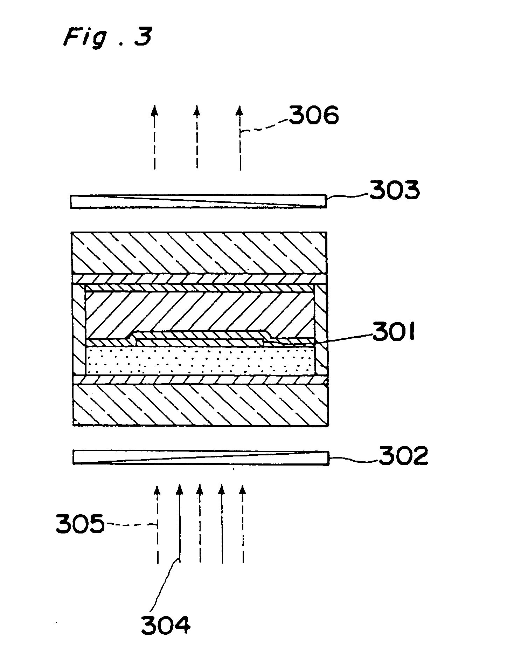

The spatial light modulator shown in Fig. 1 is a reflective design. However, the metallic electrode 104 can be replaced by a transparent conductive electrode 301 of, for example, ITO or SnOₓ, and a polarizer 302 and photodetector 303 can be positioned on the sides to enable operation as a transmission mode device. Such a device, which does not fall under the scope of the claims, is shown in Fig. 3. The input light 304 and the read light 305 are input from the same direction, and the output light 306 is obtained as the transmitted read light 305. In addition, when the photoconductive layer 103 is comprised of a material with a band gap which passes visible light, the transparent conductive electrode 301 can be eliminated and the input light 304 and the output light 306 can be treated as images.

Specific embodiments of the invention are described below.

### Embodiment 1

As shown in the cross section in Fig. 1, a 0.05 ~ 0.2 µm thick ITO film is sputtered onto the transparent insulated substrate 101 to form the transparent conductive electrode 102. Next, an a-Si:H film p/i/n diode structure (film thicknesses: p = 0.01 ~ 0.1 µm, i = 0.5 ~ 1.6 µm, n = 0.05 ~ 0.5 µm) is formed by plasma CVD to form the photoconductive layer 103. This is followed by forming a 0.05 ~ 0.5 µm thick Al metallic electrode 104, which is then covered by a rubbed polyimide alignment layer 108. Between this sequence of layers and an ITO transparent conductive electrode pattern 106 and polyimide alignment layer 108 laminated to a transparent insulated substrate 105 is sandwiched a 0.5 ~ 2 µm thick ferroelectric liquid crystal layer 107, thus forming the reflection-type spatial light modulator (1) 114.

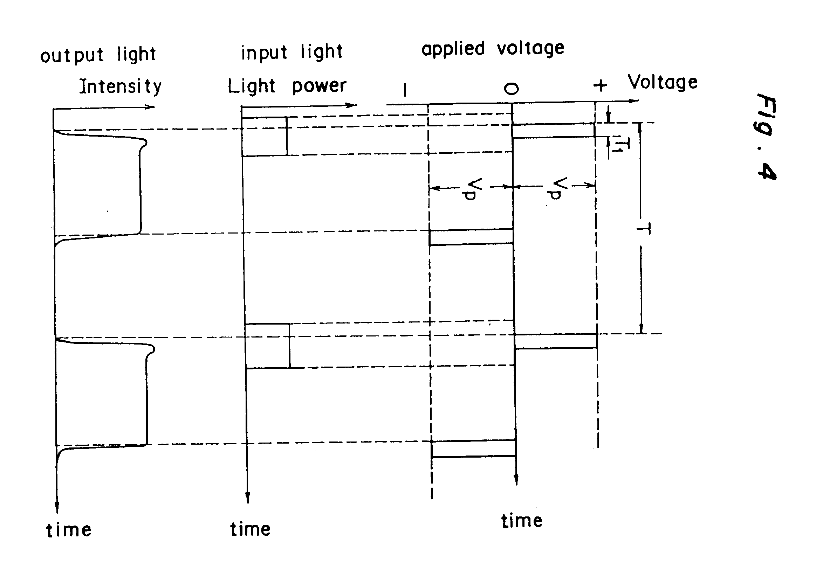

A similar element (2) wherein the thickness of the i-layer in the photoconductive layer 103 was 2.5 ~ 3.5 µm was also formed. An AC voltage waveform as shown in Fig. 4 (Vₚ = 7 V, Tₚ:T = 1:10, T = 333 µs) was applied between the two transparent conductive electrodes 102 and 106, and the operation was investigated using a green LED light (565 nm center wavelength) for the input light 110 and a He-Ne laser (633 nm) for the read light 112. The operation of the device as thus determined is described briefly below with reference to Fig. 4. It is to be noted that the applied voltage was set so that the transparent conductive electrode 106 would be positive (+).

The input light 110 was illuminated when a (+) pulse creating an inverse bias in the photoconductive layer 103 was applied, thus increasing the voltage acting on the liquid crystal layer 107 and switching the liquid crystals from an OFF to an ON state so that the output light 113 is illuminated. When a (-) pulse is applied thereafter so that the photoconductive layer 103 is forward-biased, the liquid crystals are switched off regardless of the illumination of light to the liquid crystal layer 107.

It should be noted that while the photosensitivity of element (1) was 9 µW and the rise time was 30 µs, the optical sensitivity and rise time of element (2) were 15 µW and 50 µs, respectively.

Furthermore, when the dangling bond density of the i-layer in element (1) was measured, it was shown to be 5 x 10¹⁵ ~ 1 x 10¹⁶ cm⁻³.

### Embodiment 2

A projection display apparatus, comprising a spatial light modulating device 501 of plural Al metallic electrodes 104 as described in the spatial light modulator 114 shown in Fig. 1 formed in a 1000 x 1000 two-dimensional array, a CRT (cathode ray tube) as the writing light source 502, a halogen lamp with reflecting mirror as the projection light source 503, a projection lens system 504, a polarizing beam splitter 505, and screen 506, was manufactured. It was confirmed that the image shown on the CRT 502 in this apparatus was enlarged and projected onto the screen 506.

### Embodiment 3

As shown in the cross section in Fig. 2, a 0.05 ~ 0.2 µm thick ITO film is sputtered onto the transparent insulated substrate 101 to form the transparent conductive electrode 102. Next, an a-Si_{0.8}C_{0.2}:H film p/i/n diode structure (film thicknesses: p - 0.01 ~ 0.3 µm, i = 0.1 ~ 1.2 µm, n = 0.05 ~ 0.3 µm) is formed by plasma CVD to form the photoconductive layer 103. This is followed by forming a multilayer dielectric mirror 201 of alternating Si₃N₄ and Ta₂O₅ thin films, which is then covered by a rubbed polyimide alignment layer 108. Between this sequence of layers and an ITO transparent conductive electrode pattern 106 and polyimide alignment layer 108 laminated to a transparent insulated substrate 105 is sandwiched a 0.5 ~ 2 µm thick ferroelectric liquid crystal layer 107, thus forming the reflection-type spatial light modulator (1) 114.

A similar element (2) wherein the thickness of the i-layer in the photoconductive layer 103 was 2.5 ~ 3.0 µm was also formed. An AC voltage waveform as shown in Fig. 4 (Vₚ = 7 V, Tₚ:T = 1:10, T = 333 µs) was applied between the two transparent conductive electrodes 102 and 106, a green input image 202 was input and the output image 203 was observed using a white light as the read light 112. As a result, element (1) produced a clear output image with a contrast ratio of 300:1, while only an indistinct output image was obtained with element (2). The output image of element (2) is improved by increasing the voltage Vₚ to 15 V, but destruction of liquid crystals was observed after several operations.

As thus described, a spatial light modulator enabling high sensitivity and fast operation can be obtained according to the present invention.

The invention being thus described, it will be obvious that the same may be varied in many ways. Such variations are not to be regarded as a departure from the scope of the invention as defined in the following claims.

## Claims

1. A spatial light modulator comprising
a photoconductive layer (103) having p-type, i-type and n-type regions and being made of an amorphous semiconductor containing hydrogen and at least one of elements carbon, silicon and germanium,
a mirror layer (201) formed on a surface of said photoconductive layer for reflecting a reading light,
a liquid crystal layer (107) formed on said mirror layer (201), and a pair of electrodes (102, 106) between which said photoconductive layer (103), mirror layer (201) and liquid crystal layers (107) are sandwiched,
**characterized in that**
the value of the dangling bond density of said photoconductive layer (103) when measured by electron spin resonance is less than 1 x 10¹⁶ cm⁻³, and said i-type region of said photoconductive layer (103) is formed to have a thickness such that a depletion layer is generated throughout said thickness of said i-type region when an alternating current voltage with a peak value of less than 15 V is applied between said pair of electrodes (102, 106) to apply a reverse bias to said photoconductive layer (103).

2. The spatial light modulator of claim 1, wherein said liquid crystal layer (107) is comprised of a ferroelectric liquid crystal.

3. The spatial light modulator of claim 1, wherein the thickness of the i-region of said photoconductive layer (103) is within the range of from 0.1 to 1.6 µm.

4. The spatial light modulator of claim 1, wherein the photoconductive layer (103) contains at least nitrogen or oxygen.

5. The spatial light modulator of claim 1, wherein the hydrogen content of the n-region of said photoconductive layer (103) is greater than that of the i-region.

6. The spatial light modulator of claim 1, wherein the oxygen or nitrogen content in the n-region of said photoconductive layer (103) is higher than that of the i-region.

7. The spatial light modulator of claim 1, wherein the thickness of said liquid crystal layer (107) is within a range of from 0.5 to 2 µm.

8. The spatial light modulator of claim 1, wherein the thickness of said n-type region is within a range of from 0.05 to 0.5 µm.

9. The spatial light modulator of claim 1, wherein said mirror (201) layer is comprised of a plurality of metal electrodes arranged in a pattern of two dimensional array.

10. The spatial light modulator of claim 1, wherein said mirror layer (201) is a multilayered dielectric mirror formed by alternatively stacking dielectric materials having different refractive indices.

## Patentansprüche

1. Raumlichtmodulator, aufweisend
eine photoleitende Schicht (103), die p-, i- und n-Bereiche aufweist und aus einem amorphen Halbleiter hergestellt ist, der Wasserstoff und mindestens eines der Elemente Kohlenstoff, Silicium und Germanium enthält,
eine auf einer Oberfläche der photoleitenden Schicht gebildete Spiegelschicht (201) zum Reflektieren eines Leselichts,
eine auf der Spiegelschicht (201) gebildete Flüssigkristallschicht (107) und ein Paar Elektroden (102, 106) zwischen denen die photoleitende Schicht (103), die Spiegelschicht (201) und die Flüssigkristallschicht (107) sandwichartig angeordnet sind,
**dadurch gekennzeichnet,** daß
der Wert der Dichte der freien Bindungen der photoleitenden Schicht (103) bei Messung mit der Elektronen-Spin-Resonanz weniger als 1 x 10¹⁶ cm⁻³ beträgt und der i-Bereich der photoleitenden Schicht (103) in einer Dicke ausgebildet ist, daß über die gesamte Dicke des i-Bereichs eine Verarmungsschicht erzeugt wird, wenn zwischen dem Paar Elektroden (102, 106) eine Wechselspannung mit einem Spitzenwert von weniger als 15 V angelegt wird, um an die photoleitende Schicht (103) eine Sperr-Vorspannung anzulegen.

2. Raumlichtmodulator nach Anspruch 1, bei dem die Flüssigkristallschicht (107) aus einem ferroelektrischen Flüssigkristall aufgebaut ist.

3. Raumlichtmodulator nach Anspruch 1, bei dem der i-Bereich der photoleitenden Schicht (103) eine Dicke im Bereich von 0,1 bis 1,6 µm hat.

4. Raumlichtmodulator nach Anspruch 1, bei dem die photoleitende Schicht (103) mindestens Stickstoff oder Sauerstoff enthält.

5. Raumlichtmodulator nach Anspruch 1, bei dem der Wasserstoffgehalt des n-Bereichs der photoleitenden Schicht (103) größer ist als der des i-Bereichs.

6. Raumlichtmodulator nach Anspruch 1, bei dem der Sauerstoff- oder Stickstoffgehalt des n-Bereichs der photoleitenden Schicht (103) größer ist als der des i-Bereichs.

7. Raumlichtmodulator nach Anspruch 1, bei dem die Flüssigkristallschicht (107) eine Dicke im Bereich von 0,5 bis 2 µm hat.

8. Raumlichtmodulator nach Anspruch 1, bei dem der n-Bereich eine Dicke im Bereich von 0,05 bis 0,5 µm hat.

9. Raumlichtmodulator nach Anspruch 1, bei dem die Spiegelschicht (201) aus mehreren Metallelektroden aufgebaut ist, die im Muster eines zweidimensionalen Arrays angeordnet sind.

10. Raumlichtmodulator nach Anspruch 1, bei dem die Spiegelschicht (201) ein dielektrischer Spiegel mit vielen Schichten ist, der durch abwechselndes Stapeln von dielektrischen Materialien gebildet ist, die unterschiedliche Refraktionsindices haben.

## Revendications

1. Modulateur spatial de lumière comprenant :
une couche photoconductrice (103) ayant des régions du type p, du type i et du type n et constituée d'un semiconducteur amorphe contenant de l'hydrogène et au moins l'un des éléments carbone, silicium et germanium,
une couche réfléchissante (201) formée sur la surface de ladite couche photoconductrice pour réfléchir une lumière de lecture,
une couche de cristal liquide (107) formée sur ladite couche réfléchissante (201), et
une paire d'électrodes (102, 106) entre lesquelles lesdites couche photoconductrice (103), couche réfléchissante (101) et couche de cristal liquide (107) sont disposées en sandwich,
caractérisé en ce que
la valeur de la densité des combinaisons libres de ladite couche photoconductrice (103) lorsqu'on la mesure par résonance de spin électronique est inférieure à 1 x 10¹⁶ cm⁻³, et ladite région du type i de ladite couche photoconductrice (103) est formée de manière à avoir une épaisseur telle qu'une couche d'épuisement est produite à travers ladite épaisseur de ladite région du type i lorsqu'une tension à courant alternatif avec une valeur de crête inférieure à 15 V est appliquée entre ladite paire d'électrodes (102, 106) afin d'appliquer une polarisation inverse à ladite couche photoconductrice (103).

2. Modulateur spatial de lumière selon la revendication 1, dans lequel ladite couche à cristal liquide (107) est constituée d'un cristal liquide ferroélectrique.

3. Modulateur spatial de lumière selon la revendication 1, dans lequel l'épaisseur de la région i de ladite couche photoconductrice (103) est comprise dans la gamme de 0,1 à 1,6 µm.

4. Modulateur spatial de lumière selon la revendication 1, dans lequel la couche photoconductrice (103) contient au moins de l'azote ou de l'oxygène.

5. Modulateur spatial de lumière selon la revendication 1, dans lequel la teneur en hydrogène de la région n de ladite couche photoconductrice (103) est supérieure à celle de la région i.

6. Modulateur spatial de lumière selon la revendication 1, dans lequel la teneur en oxygène ou en azote de la région n de ladite couche photoconductrice (103) est supérieure à celle de la région i.

7. Modulateur spatial de lumière selon la revendication 1, dans lequel l'épaisseur de ladite couche de cristal liquide (107) est comprise dans la gamme de 0,5 à 2 µm.

8. Modulateur spatial de lumière selon la revendication 1, dans lequel l'épaisseur de ladite région du type n est comprise dans la gamme de 0,05 à 0,5 µm.

9. Modulateur spatial de lumière selon la revendication 1, dans lequel ladite couche réfléchissante (201) est constituée d'une multitude d'électrodes métalliques disposées dans la configuration d'un réseau à deux dimensions.

10. Modulateur spatial de lumière selon la revendication 1, dans lequel ladite couche réfléchissante (201) est un miroir diélectrique à couches multiples constitué de matériaux diélectriques empilés en alternance qui ont des indices de réfraction différents.
